# EUROPEAN PATENT SPECIFICATION

(11) **EP 1 170 737 B1**
(45) Date of publication and mention of the grant of the patent: **22.03.2006**
(21) Application number: 01303923.5
(22) Date of filing: 30.04.2001
(51) Int. Cl.: G11B 7/125

(54) **Compatible optical pickup device adopting single light source**
Kompatibles optisches Abtastgerät mit einer einzelnen Lichtquelle
Tête de lecture optique compatible avec une source unique de lumière

(30) Priority: 08.07.2000 KR 2000039091
(43) Date of publication of application: 09.01.2002
(73) Proprietor: SAMSUNG ELECTRONICS CO., LTD., Suwon-City, Kyungki-do (KR)
(72) Inventor: Yoo, Jang-hoon, 3 dong, Youngdungpo-gu, Seoul (KR); Lee, Chul-woo, Bundang-gu, Seongnam-si, Geyonggi-do (KR); Jung, Seung-tae, Seongnam-si, Gyeonggi-do (KR)
(74) Representative: Davies, Robert Ean

(56) References cited:
- EP-A- 0 776 002
- EP-A- 0 805 440
- EP-A- 0 838 812
- EP-A- 0 865 037
- EP-A- 0 921 521
- US-A- 6 043 912
- US-A- 6 088 322
- US-A- 6 091 691
- US-A- 6 118 594
- US-B1- 6 480 344

## Description

The present invention relates to a compatible optical pickup device which can compatibly read/write optical disks of the CD family or DVD family, and more particularly, to a compatible optical pickup device adopting a single light source for emitting light having a wavelength longer than 650 nm.

A typical optical pickup device reproduces and records information on and/or from a recording medium in a noncontact manner. An optical pickup device capable of performing reproducing/recording of optical disks of the DVD family having a thickness of 0.6 mm (hereinafter referred to as "DVD") adopts an objective lens having a numerical aperture of 0.6 and a light source for emitting light having a 650 nm wavelength. Here, the optical pickup device for DVD should be compatible with optical disks of a CD family which is 1.2 mm thick (hereinafter referred to as "CD").

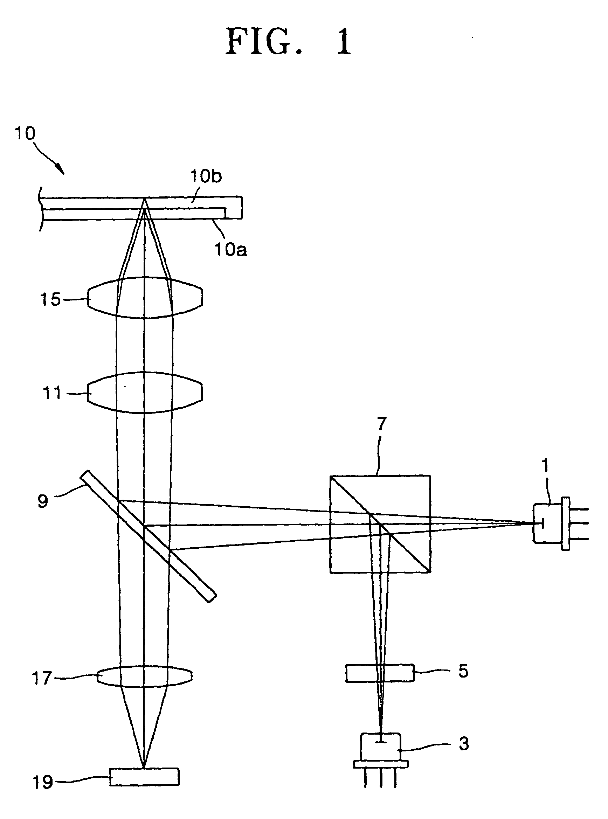

In consideration of the above matter, optical pickup devices which can compatibly reproduce/record optical disks in different formats have been suggested. A conventional optical pickup which can compatibly reproduce/record a CD and a DVD, as shown in Figure 1, has the structure adopting two light sources 1 and 3 for emitting light having different wavelengths.

Referring to Figure 1, a first light source 1 emits light having 635 or 650 nm to reproduce/record a DVD 10a which is relatively thin. A second light source 3 emits light having a 780 nm wavelength to reproduce/record a CD 10b which is relatively thick. The light emitted from the first light source 1 passes through a first beam splitter 7 and is reflected by a second beam splitter 9 so as to proceed toward an optical disk 10. The light emitted from the second light source 3 is sequentially reflected by the first and second beam splitters 7 and 9 and proceeds toward the optical disk 10. An objective lens 15 focuses incident light output from the first and second light sources 1 and 3 to form a light spot. Here, the light emitted from the first light source 1 is focused on the relatively thin DVD 10a while the light emitted from the second light source 3 is focused on the relatively thick CD 10b.

The light reflected by the disk 10 is incident on the second beam splitter via the objective lens 15. Most of the light passes through the second beam splitter 9 and is received by a photodetector 19. Here, reference numeral 5 denotes a grating for diffracting and splitting the light output from the second light source 3 into the 0^{th} order and the ±1^{st} order rays to detect a tracking error signal by a three-beam method during reproducing/recording of the CD 10b. Reference numeral 11 denotes a collimating lens for converting the divergent light output from the first and second light sources 1 and 3 into a parallel beam. Reference numeral 17 denotes a sending lens 17 for focusing the incident light reflected by the disk 10 and passing through the second beam splitter 9 so that the light can be received by the photodetector 19.

Since the conventional compatible optical pickup device having the above structure includes two light sources 1 and 3 emitting light having different wavelengths, optical disks of both the CD family and DVD family can be reproduced/recorded.

However, since the conventional compatible optical pickup device adopts two separate light sources, a cost of manufacturing is high and the structure thereof is complicated, and further, assembly and optical arrangement is difficult. Further, the light source 1 for a 635 or 650 nm wavelength which can emit recording power for DVD-R and/or DVD-RAM is expensive, which prevents reduction of the entire cost of a compatible optical pickup device.

European patent number EP 0 838 812 discloses an optical pickup device adopting a single light source for emitting light having a wavelength between 610 and 670nm.

With a view to solve or reduce the above problems, it is an aim of embodiments of the present invention to provide an inexpensive compatible optical pickup device adopting a single light source for emitting light having a wavelength longer than 650 nm so that an optical disk of the CD family and DVD family can be compatibly reproduced/recorded.

According to a first aspect of the invention, there is provided a compatible optical pickup device including a single light source, an objective lens for forming a light spot on an optical disk by focusing light emitted from the light source, an optical path changing means arranged on the optical path between the light source and the objective lens for changing a proceeding path of incident light, and a photodetector for receiving light reflected by the optical disk and passing through the objective lens and the optical path changing means and detecting an information signal and/or error signal, the objective lens is formed of a near axis area, a ring type annular lens area, and a far axis area with respect to an apex, for focusing light emitted from the light source to form light spots suitable for a first optical disk which is relatively thin and a second optical disk which is relatively thick; characterized in that: the objective lens forms a first light spot suitable for the first optical disk which has an FWHM (full width at half maximum) of equal to or less than 0.72 *µ*m and a second light spot suitable for the second optical disk which has an FWHM of greater than or equal to 0.8 *µ*m; and the single light source emits light having a wavelength of between 680-780nm.

Preferably, the first optical disk is an optical disk of a DVD family and the second optical disk is an optical disk of a CD family.

Preferably, the objective lens has an effective numerical aperture of greater than or equal to 0.63 with respect to the first optical disk and an effective numerical aperture of less than or equal to 0.53 with respect to the second optical disk.

Preferably, the objective lens has an effective numerical aperture of equal to or greater than 0.7 with respect to the first optical disk which is relatively thin.

Preferably, the light source emits light having a wavelength of about 780 nm, and the objective lens has an effective numerical aperture of greater than or equal to 0.7 with respect to the first optical disk and an effective numerical aperture of less than or equal to 0.53 with respect to the second optical disk.

Preferably, the annular lens area of the objective lens is optimized to the second optical disk so that, when the first optical disk is to be reproduced/recorded, a light spot of light passing through the near axis area and the far axis area is focused on the information recording surface of the first optical disk, while, when the second optical disk is to be reproduced/recorded, a light spot of light passing through the near axis area and the annular lens area is focused on the information recording surface of the second optical disk.

Preferably, the light source is an edge emitting laser or a vertical cavity surface emitting laser, and the optical path changing means comprises: a polarization hologram element for diffracting incident light to the 0^{th} order ray, or +1^{st} order and/or -1^{st} order rays according to a linear polarization component thereof; and a wave plate for changing the polarization of the incident light.

Preferably, the light source is an edge emitting laser or a vertical cavity surface emitting laser, and the optical path changing means comprises a beam splitter arranged between the light source and the objective lens for transmitting and/or reflecting incident light.

Preferably, the beam splitter is provided to transmit or reflect incident light according to polarization of the incident light, and further comprises a wave plate arranged between the beam splitter and the objective lens for changing the polarization of the incident light.

Preferably, the device further comprises a collimating lens on an optical path between the optical path changing means and the objective lens.

According to a second aspect there is provided a compatible optical pickup device including a single light source, an objective lens for forming a light spot on an optical disk by focusing light emitted from the light source, an optical path changing means arranged on the optical path between the light source and the objective lens for changing a proceeding path of incident light, and a photodetector for receiving light reflected by the optical disk and passing through the objective lens and the optical path changing means and detecting an information signal and/or error signal, the objective lens is formed of a near axis area, a ring type annular lens area, and a far axis area with respect to an apex, for focusing light emitted from the light source to form light spots suitable for a first optical disk which is relatively thin and a second optical disk which is relatively thick and having an effective numerical aperture of greater than or equal to 0.63 with respect to the first optical disk and an effective numerical aperture of less than or equal to 0.53 with respect to the second optical disk, the compatible optical pickup device characterized in that the single light source emits light having a wavelength between 680-780nm.

Preferably, the first optical disk is an optical disk of a DVD family and the second optical disk is an optical disk of a CD family.

Preferably, the annular lens area of the objective lens is optimized to the second optical disk so that, when the first optical disk is to be reproduced/recorded, a light spot of light passing through the near axis area and the far axis area is focused on the information recording surface of the first optical disk, while, when the second optical disk is to be reproduced/recorded, a light spot of light passing through the near axis area and the annular lens area is focused on the information recording surface of the second optical disk.

For a better understanding of the invention, and to show how embodiments of the same may be carried into effect, reference will now be made, by way of example, to the accompanying diagrammatic drawings in which:
Figure 1 is a view showing the optical arrangement of an example of a conventional compatible optical pickup device;
Figure 2 is a view showing the optical arrangement of a compatible optical pickup device adopting a single light source according to a preferred embodiment of the present invention;
Figure 3 is a plan view of the objective lens of the device of Figure 2;
Figures 4 and 5 are views showing examples of objective lenses which may form part of the device of Figure 2;
Figure 6 is a view showing the optical arrangement of a compatible optical pickup device adopting a single light source according to another preferred embodiment of the present invention;
Figure 7 is a view showing the optical arrangement of a compatible optical pickup device adopting a single light source according to yet another preferred embodiment of the present invention;
Figures 8A and 8B are graphs indicating an aberration characteristic according to the field of an incident beam between an objective lens of an embodiment of the present invention and the conventional 650 nm objective lens;
Figures 9A and 9B are graphs indicating an aberration characteristic according to the tilt of an optical disk between an objective lens of an embodiment of the present invention and a conventional 650 nm objective lens; and
Figure 10 is a graph showing a reproduction signal value according to the depth of a pit when a DVD is reproduced by the compatible optical pickup device according to an embodiment of the present invention.

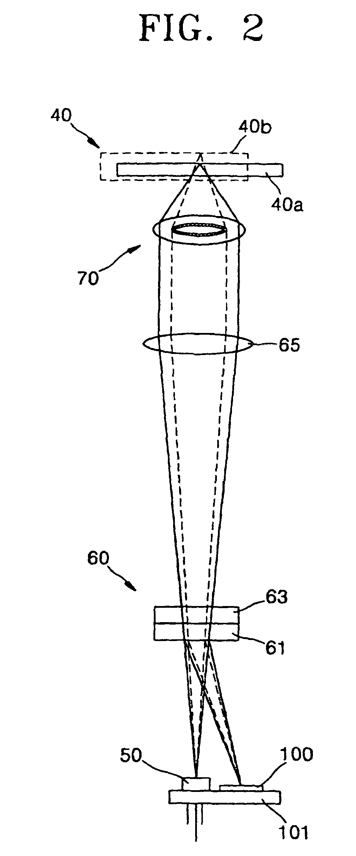

Referring to Figure 2, a compatible optical pickup device according to a preferred embodiment of the present invention includes a single light source 50 for emitting light having a wavelength longer than 650 nm, an objective lens 70 mounted and driven on an actuator (not shown) for focusing and tracking controls for forming a light spot suitable for each of the first and second optical disks 40a and 40b having different thicknesses by focusing the light output from the light source 50, an optical path changing means disposed on an optical path between the light source 50 and the objective lens 70 for changing a proceeding path of the incident light, and a photodetector 100 for receiving the light reflected by an optical disk 40. Here, the first optical disk 40a is an optical disk of the DVD family which is relatively thin and the second optical disk 40b is an optical disk of the CD family which is relatively thick.

Preferably, a semiconductor laser for emitting light of a high optical power, that is, an edge emitting laser or a vertical cavity surface emitting laser, to be used not only for reproducing information signals but also for recording information signals, is provided as the light source 50. The light source 50 emits light having a wavelength longer than 650 nm, for example, a wavelength between 660 nm through 790 nm. Here, the light source 50 preferably emits light having a wavelength between 680 nm through 780 nm.

Here, with respect to a recording optical power for a DVD-R and/or DVD-RAM, the unit cost of production of a semiconductor laser for a wavelength longer than 650 nm is much lower than that of a semiconductor laser for a 650 nm wavelength. Thus, according to the present invention, the unit cost of production of the light source 50 can be drastically reduced. For example, when a 680 nm semiconductor laser is adopted as the light source 50, since the unit cost of production of the 680 nm semiconductor laser is much lower than a 650 nm semiconductor laser adopted as a general light source for DVD, the unit cost of production of the compatible optical pickup device according to the present invention can be drastically reduced.

When a semiconductor laser for emitting light having a wavelength over 750 nm is adopted as the light source 50, the cost of the compatible optical pickup device according to the present invention can be much low and simultaneously a CD-R which is currently commercialized can be compatibly reproduced/recorded. Here, since the currently commercialized CD-R has an organic pigment film recording layer having a large absorptivity with respect to light having a wavelength less than 750 nm, in order to reproduce/record the CD-R, a light source for emitting light having a wavelength equal to or greater than 750 nm to prevent destruction of recording data due to a difference in sensitivity, is needed. Of course, if the CD-R is manufactured to have a small absorptivity with respect to the light having a wavelength equal to or less than 750 nm, the compatible optical pickup device according to the present invention can compatibly reproduce/record CD-Rs regardless of a wavelength range of the adopted light source 50.

When a semiconductor laser is provided as the light source 50, the light source 50 emits linearly polarized light approximately in one direction. Thus, it is preferable to include a holographic beam splitter 60 consisting of a polarization hologram element 61 for diffracting incident light into the 0^{th} order ray, or the +1^{st} order and/or the -1^{st} order rays according to a linear polarization component and a wave plate 63 for converting the polarization of the incident light. In this case, most of the light emitted from the light source 50 proceeds toward the optical disk 40 while most of the light reflected by the optical disk 40 is received by the photodetector 100, so that the efficiency in use of light is high.

The polarization hologram element 61 is preferably arranged to diffract the light output from the light source 50 and linearly polarized in one direction into the 0^{th} order ray. Preferably, a quarter wave plate with respect to the wavelength of the light emitted from the light source 50 is provided as the wave plate 63 and arranged to convert the linearly polarized light output from the light source 50 to a circularly polarized light.

Thus, the light output from the light source 50 and linearly polarized light in one direction is diffracted into the 0^{th} order ray by the polarization hologram element 61, converted to one circularly polarized light while passing through the wave plate 63, and focused on the information recording surface of the optical disk 40 by the objective lens 70. The focused light is reflected by the information recording surface of the optical disk 40 and converted to another circularly polarized light. The other circularly polarized light is converted to light linearly polarized in other direction while passing through the wave plate 63 and diffracted into the +1^{st} order and/or -1^{st} order rays by the polarization hologram element 61 and proceeds toward the photodetector 100.

The photodetector 100 receives light reflected by the optical disk 40 and passing through the objective lens 70 and the holographic beam splitter 60 and detects information signal and/or error signal. The photodetector 100 includes a plurality of sectional plates (not shown) each independently performing photoelectric conversion.

When the holographic beam splitter 60 is provided as the optical path changing means, since the photodetector 100, as shown in Figure 2, can be installed on a base 101 where the light source 50 is installed, the photodetector 100 and the light source 50 can be modularized. Here, as the holographic beam splitter 60, a holographic device (not shown) may be provided by which most of the light output from the light source 50 is diffracted into the 0^{th} order ray and most of the light output from the optical disk 40 is diffracted into the +1^{st} order and/or -1^{st} order ray.

Here, reference numeral 65 denotes a collimating lens for forming an indefinite optical system by changing the divergent light output from the light source 50 to a parallel light. The collimating lens 65 is preferably arranged between the optical path changing means and the objective lens 70. In this case, the collimating lens 65 converts the divergent light output from the light source 50 to a parallel light and simultaneously the light reflected by the optical disk 40 and incident thereon to a focused light to proceed toward the photodetector 100.

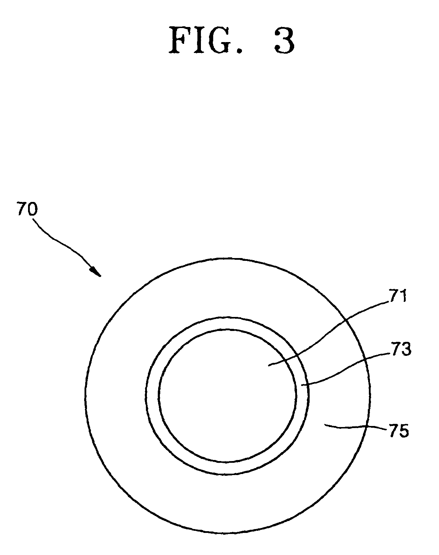

The objective lens 70, as shown in Figure 3, consists of a near axis area 71, a ring type annular lens area 73 and a far axis area 75 with respect to an apex. Here, the apex is a point where the central axis of the objective lens 70 and the surface of the objective lens 70 meet. The annular lens area 73 is an area on which light of an intermediary area between the near axis area 71 and the far axis area 75 is incident, which is formed to be an oval ring or circular ring type on the surface of the objective lens 70 facing the light source 50 or the recording medium 40.

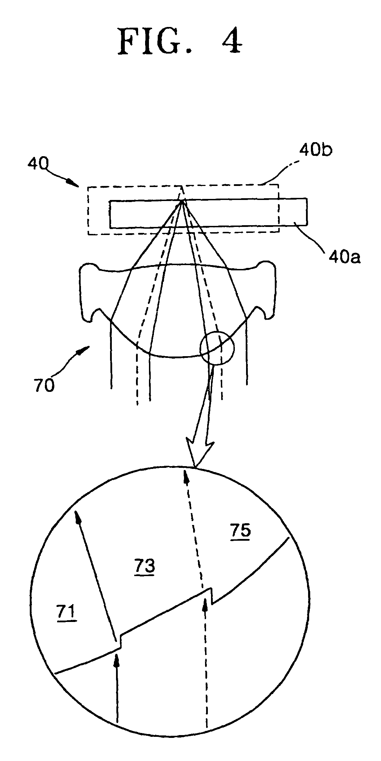

According to a preferred embodiment of the present invention, the annular lens area 73 is formed to be aspherical as shown in Figure 4 and is preferably optimized with respect to the relatively thick second optical disk 40b.

If the annular lens area 71 has an aspherical shape optimized with respect to the second optical disk 40b, when the relatively thin first optical disk 40a is to be reproduced/recorded, the light emitted from the light source 50 and passes through the near axis area 71 and the far axis area 75 is focused on the information recording surface of the first optical disk 40a. The light emitted from the light source 50 and passes through the annular lens area 73 between the near axis area 71 and the far axis area 75 is so spread that information cannot be reproduced from the information recording surface of the first optical disk 40a.

When the second optical disk 40b is used, of the light emitted from the light source 50, the light passing through the near axis area 71 and the annular lens area 73 is focused on the information recording surface of the second optical disk 40b as a light spot, while the light passing through the far axis area 75 is so spread so that it cannot be used to reproduce information from the information recording surface of the second optical disk 40b.

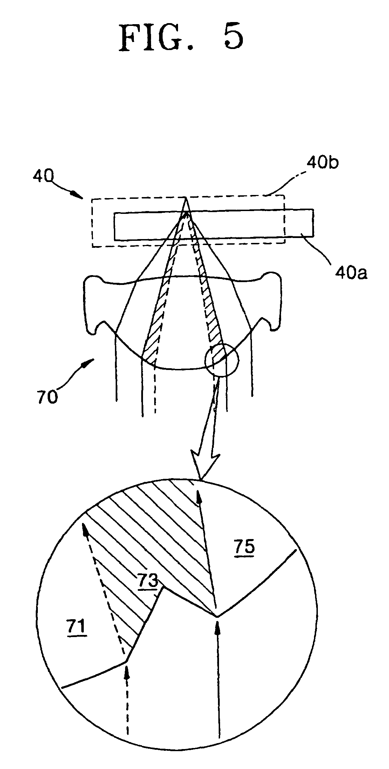

Alternatively, the annular lens area 73, as shown in Figure 5, can be formed to shield or scatter incident light. In this case, when the first optical disk 40a is used, of the light emitted from the light source 50, the light passing through the near axis area 71 and the far axis area 75 is focused on the information recording surface of the first optical disk 40a as a light spot, while the light passing through the annular lens area 73 is shielded or scattered so that it cannot be focused on the information recording surface of the first optical disk 40b. Also, when the second optical disk 40abis used, of the light emitted from the light source 50, the light passing through the near axis area 71 is focused on the information recording surface of the second optical disk 40b as a light spot. In contrast, the light passing the far axis area 75 is not focused on the information recording surface of the second optical disk 40b with an intensity suitable for reproducing and/or recording, while the light passing through the annular lens area 73 is shielded or scattered so that it is not focused on the information recording surface of the second optical disk 40b.

The objective lens 70 having the structure according to the present invention is provided to focus the light output from the light source 50 so that a light spot suitable for each of the first and second optical disks 40a and 40b having difference thicknesses can be formed. That is, the objective lens 70 according to the present invention preferably forms a light spot having an FWHM (full with at half maximum) equal to or less than 0.72 *µ*m (a width which is equal to or less than 1.2 *µ*m at 1/e²) with respect to the first optical disk 40a, and a light spot having an FWHM equal to or greater than 0.8 *µ*m (a width which is equal to or greater than 1.3 *µ*m at 1/e²) with respect to the second optical disk 40b.

In order to form a light spot having the above size, the objective lens 70 has a numerical aperture related to the wavelength of the light emitted from the light source 50. That is, when the light source 50 emits light having a wavelength between 680 - 780 nm, the objective lens 70 has an effective numerical aperture of equal to or greater than 0.63 with respect to the first optical disk 40a and an effective numerical aperture equal to or less than 0.53 with respect to the second optical disk 40b. When the light source 50 emits light having a 780 nm wavelength, the objective lens 70 has an effective numerical aperture equal to or greater than 0.7 with respect to the first optical disk 40a and an effective numerical aperture equal to or less than 0.53 with respect to the second optical disk 40b.

As a detailed example, when the light source 50 emits light having a wavelength of 680, 720 or 780 nm, the objective lens 70 has an effective numerical aperture of about 0.63, 0.66 or 0.71 with respect to the first optical disk 40a.

Here, Figure 2 shows a case in which the objective lens 70 having the annular lens area 73 having an aspherical shape described with reference to Figure 4 is adopted. In particular, in Figure 2, the objective lens 70 is schematically illustrated to show the focus of the light according to the incident areas.

Also, in Figures 2, 4 and 5, the light incident surface of the second optical disk 40b is disposed close to the objective lens 70 than the light incident surface of the first optical disk 40a. This is to show a difference in distance between the objective lens 70 and the light incident surface of the first optical disk 40a and distance between the objective lens 70 and the light incident surface of the second optical disk 40b, that is, a working distance difference. In an actual system, the light incident surfaces of the first and second optical disks are located at the same position, and when the second optical disk 40b is used, the objective lens 70 is driven by an actuator and is moved closer to the second optical disk 40b than in the first optical disk 40a to be suitable for the working distance.

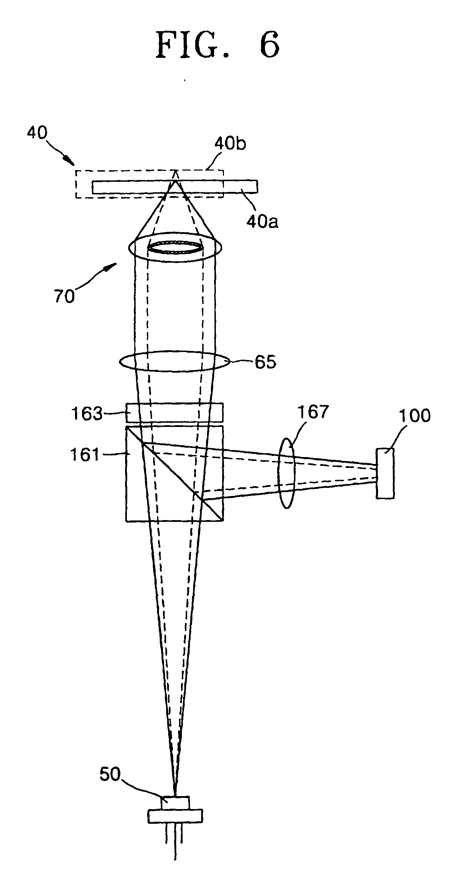

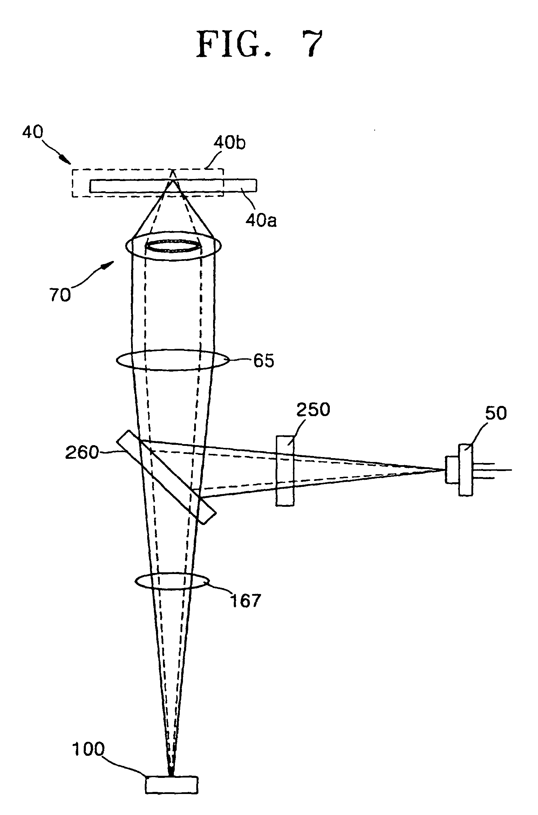

The compatible optical pickup device according to the present invention, as shown in Figures 6 and 7, may include a beam splitter type optical path changing means. That is, as the optical path changing means, as shown in Figure 6, a polarizing beam splitter 161 disposed between the light source 50 and the objective lens 70 for transmitting or reflecting incident light according to polarization and a wave plate 163 disposed between the polarizing beam splitter 161 and the objective lens 70 for converting polarization of incident light may be provided. Also, as the optical path changing means, as shown in Figure 7, a beam splitter 260 disposed between the light source 50 and the objective lens 70 for transmitting and reflecting incident light in a predetermined ratio may be provided.

As shown in Figures 6 and 7, when the above beam splitter type optical path changing means is provided, a sensing lens 167 disposed on the optical path between the optical path changing means and the photodetector 100 for focusing incident light so that it can be received by the photodetector 100, is further provided.

In addition, the compatible optical pickup device according to the present invention, as shown in Figure 7, further includes a diffraction element 250 disposed between the light source 50 and the optical path changing means for diffracting the light emitted from the light source 50. The diffraction element 250 is used to detect a DPP (differential push-pull) signal for tracking when a DVD-RAM is reproduced, or a tracking signal in a three beams method when a CD is reproduced. The two diffraction element 250 may be provided for the reproduction of each of a DVD-RAM and a CD. The diffraction element 250 may be applied to the compatible optical pickup device shown in Figures 2 and 6.

Since the remaining members of Figures 6 and 7 are the same as those described with reference to Figure 2, the same reference numerals are used therefor and detailed descriptions thereof will be omitted.

The compatible optical pickup device according to the present invention is not limited to the optical configuration as shown in Figures 2, 6 and 7, and of course, a variety of modifications thereto are possible.

Since the compatible optical pickup devices according to the preferred embodiments of the present invention adopt a single light source 50 for emitting light having a wavelength longer than 650 nm, preferably, a wavelength between 680 nm through 780 nm, a cost for the system can be lowered. Also, since the compatible optical pickup device according to the present invention includes an objective lens 70 designed to have an effective numeral aperture suitable for the first and second optical disks 40a and 40b in relation to the wavelength of the light emitted from the single light source 50, a light spot having an FWHM equal to or less than 0.72 *µ*m is formed with respect to the first optical disk 40a while a light spot having an FWHM greater than or equal to 0.8 *µ*m is formed with respect to the second optical disk 40b. Thus, the compatible optical pickup device according to the present invention can compatibly reproduce/record the first and second optical disks 40a and 40b having different thicknesses. Of course, when the light source 50 for emitting light having a wavelength greater than or equal to 750 nm is adopted, a CD-R which is presently commercialized can be reproduced/recorded.

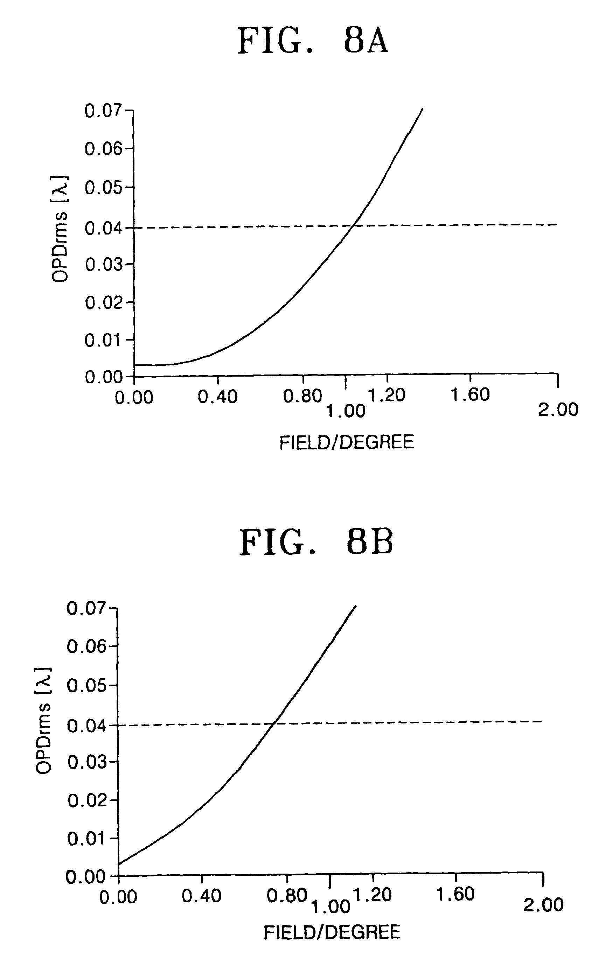

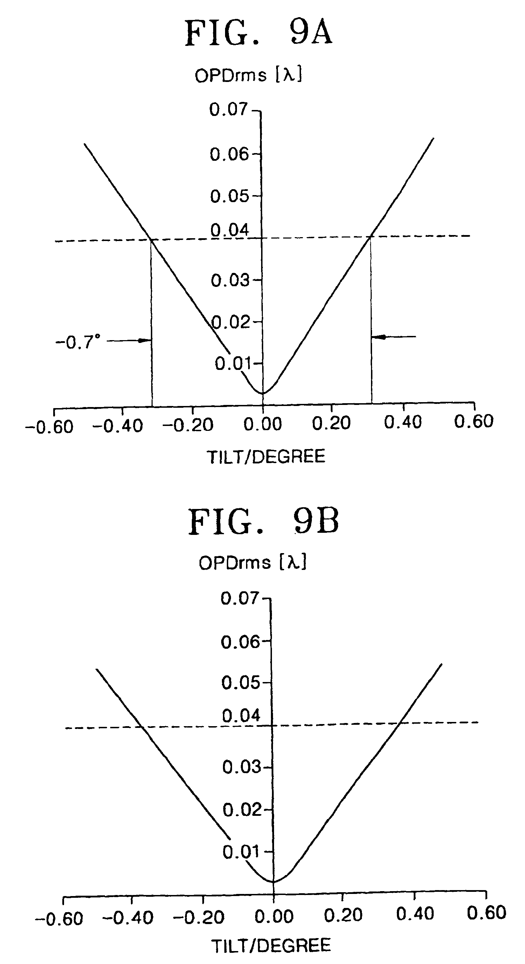

With reference to Table 1 and Figures 8A, 8B, 9A and 9B, properties of the objective lens 70 according to the present invention which is designed to compatibly reproduce/record the first and second optical disks 40a and 40b with respect to a 780 nm wavelength and a conventional objective lens for a DVD with respect to a 650 nm wavelength (not shown; hereinafter referred to as an objective lens for 650 nm) are compared with each other.

Table 1 shows data values of the objective lens 70 of the present invention with respect to the first optical disk 40a, that is, a DVD. The working distance is a distance between the surface of the objective lens 70 facing the optical disk 40 and the surface of the optical disk 40 on which light is incident. When the second optical disk 40b, that is, a CD, is reproduced/recorded, the working distance is reduced by 0.3 mm. The aberration properties in the case of a DVD are shown in Figures 8A through 9B. A value of 0.04λ indicated by dotted lines of Figure 8A, 8B, 9A and 9B is allowable optical aberration (OPDrms) with respect to a DVD in the optical disk system.

**[Table 1]**

| | Objective Lens (present invention) | Objective Lens (conventional) | Remarks |
|---|---|---|---|
| NA | 0.73 | 0.61 | |
| Working Distance (mm) | 1.3 | 1.8 | Reduced by 0.3 mm in the case of CD |
| Effective Diameter (mm) | 4.09 | 4.03 | |
| Focal Distance (mm) | 2.8 | 3.3 | |
| Maximum Angle of Curved Surface of Lens | 55° | 51° | Possible to manufacture |
| OPDrms at Field Height of 1.0° | 0.033λ | 0.060λ | |
| OPDrms at Optical Disk Tilt of 0.35° | 0.041λ | 0.038λ | Allowable Optical Disk Tilt: 0.35° |

Referring to Table 1, the objective lens for 650 nm has numerical aperture of 0.61 while the objective lens 70 of the present invention is designed to have numerical aperture of 0.73. That is, the objective lens 70 for 780 nm of the present invention has numerical aperture greater than the conventional objective lens for 650 nm. While the objective lens for 650 nm has a working distance of 1.8 mm, the objective lens 70 of the present invention has a working distance of 1.3 mm. Of course, when a CD is to be reproduced/recorded, the working distance is reduced by 0.3 mm as shown in Figures 2, and 4 through 7. The effective diameter of the objective lens for 650 nm is 4.03 mm and the focal distance is 3.3 mm, while the objective lens 70 of the present invention has an effective diameter of 4.09 mm and a focal distance of 2.8 mm. While the maximum angle of the curved surface of the objective lens for 650 nm is 51°, the objective lens 70 of the present invention is manufactured to have the maximum angle of the curved surface of 55°. The above maximum angle is a value which can be manufactured.

Referring to Table 1 and Figures 8A and 8B showing aberration properties according to incident beam fields of the objective lens 70 of the present invention and the objective lens for 650 nm, the objective lens for 650 nm shows an OPDrms of 0.06λ with respect to a field height of 1.0°, while the objective lens 70 of the present invention shows an OPDrms of 0.033λ, exhibiting a superior field aberration than that of the objective lens for 650 nm. Here, field aberration is generated when the light emitted from the light source is incident on the objective lens at an inclined angle. Thus, a objective lens preferably has field aberration equal to or less than 0.04λ which is an allowable optical aberration value, with respect to a field height of 1° considering allowance in assembly of the optical pickup device.

Referring to Table 1 and Figures 9A and 9B showing aberration properties according to inclination of the optical disk 40 of the objective lens 70 of the present invention and the objective lens for 650 nm, with respect to the tile of the optical disk 40 in which an allowable tilt angle of an optical disk system is 0.35°, the objective lens 70 of the present invention shows OPDrms of 0.041λ which is similar to the OPDrms of 0.038λ of the objective lens for 650 nm.

As can be seen from the above, when a DVD is reproduced/recorded, the objective lens 70 of the present invention designed with respect to 780 nm exhibits a aberration property which is similar to or superior to the conventional objective lens for a DVD designed with respect to 650 nm. Also, the objective lens 70 of the present invention has a numerical aperture greater than that of the conventional objective lens for a DVD. Accordingly, even when light having a wavelength greater than 650 nm is used, a light spot having a small size suitable for reproducing/recording a DVD can be formed. Thus, in a compatible optical pickup device adopting a single light source for a wavelength longer than 650 nm according to the present invention can compatibly reproduce/record not only the second optical disk 40b of a CD family but also the optical disk 40 of a DVD family.

Here, the size of a light spot is proportional to λ/NA (λ is a wavelength and NA is the numerical aperture of the objective lens 70). Thus, since the objective lens 70 of the present invention has numerical aperture greater than a typical objective lens for a DVD, even when light having a wavelength longer than 650 nm is used, a small light spot needed to reproduce/record the first optical disk 40a of a DVD family can be formed.

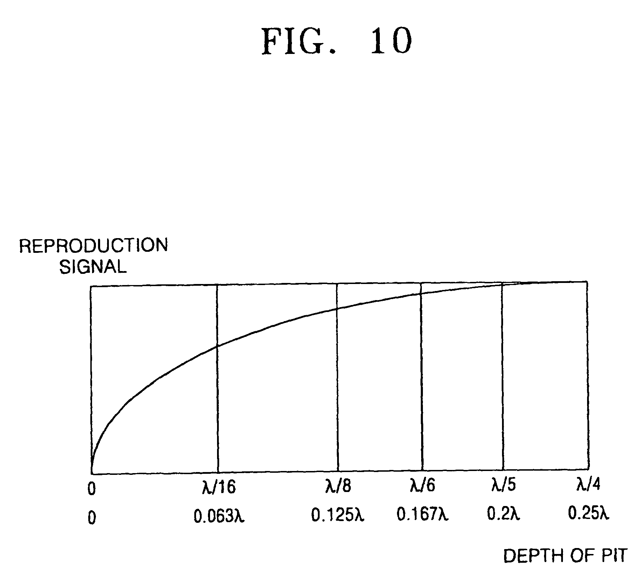

Figure 10 shows values of reproduction signals according to the depth of a pit when a DVD is reproduced by a compatible optical pickup device according to the present invention. In Figure 10, the reproduction signals are obtained with respect to values of reproduction signals detected when a DVD having a pit of which the depth is λ/6 is reproduced by a conventional DVD dedicated apparatus. As shown in the drawing, when the 780 nm light source 50 and the objective lens 70 having numerical aperture greater than that of the conventional objective lens for 650 nm with respect to a DVD are adopted, in the case in which the depth of a pit of a DVD is λ/6, since about 90% of the amplitude of the signal can be detected compared to the signal by the conventional DVD dedicated apparatus, a DVD can be reproduced.

As described above, since the compatible optical pickup device according to the present invention includes an inexpensive single light source for emitting light a wavelength longer than 650 nm and an objective lens, designed in relation to the wavelength of the light emitted from the light source, for forming a light spot having an FWHM equal to or less than 0.72 µm with respect to an optical disk of a DVD family and a light spot having an FWHM greater than or equal to 0.8 µm with respect to an optical disk of a CD family, it has an inexpensive and simple structure and can compatibly reproduce/record an optical disk of a CD or DVD family.

## Claims

1. A compatible optical pickup device including a single light source (50), an objective lens (70) for forming a light spot on an optical disk (40) by focusing light emitted from the light source (50), an optical path changing means arranged on the optical path between the light source (50) and the objective lens (70) for changing a proceeding path of incident light, and a photodetector (100) for receiving light reflected by the optical disk (40) and passing through the objective lens and the optical path changing means and detecting an information signal and/or error signal, the objective lens (70) is formed of a near axis area, a ring type annular lens area, and a far axis area with respect to an apex, for focusing light emitted from the light source (50) to form light spots suitable for a first optical disk (40A) which is relatively thin and a second optical disk (40B) which is relatively thick;
**characterized in that**:
the objective lens (70) forms a first light spot suitable for the first optical disk (40A) which has an FWHM of equal to or less than 0.72 *µ*m and a second light spot suitable for the second optical disk (40B) which has an FWHM of greater than or equal to 0.8 *µ*m; and
the single light source (50) emits light having a wavelength between 680-780nm, whereby the term FWHM means full width at half maximum.

2. The device as claimed in claim 1, wherein the first optical disk (40A) is an optical disk of a DVD family and the second optical disk (40B) is an optical disk of a CD family.

3. The device as claimed in claim 1 or 2, wherein the objective lens (70) has an effective numerical aperture of greater than or equal to 0.63 with respect to the first optical disk and an effective numerical aperture of less than or equal to 0.53 with respect to the second optical disk.

4. The device as claimed in either claim 1 or claim 2, wherein the objective lens (70) has an effective numerical aperture of equal to or greater than 0.7 with respect to the first optical disk which is relatively thin.

5. The device as claimed in either claim 1 or 2,
wherein the light source (50) emits light having a wavelength of about 780 nm, and the objective lens (70) has an effective numerical aperture of greater than or equal to 0.7 with respect to the first optical disk and an effective numerical aperture of less than or equal to 0.53 with respect to the second optical disk (40B).

6. The device as claimed in any preceding claim, wherein the annular lens area of the objective lens (70) is optimized to the second optical disk (40B) so that, when the first optical disk (40A) is to be reproduced/recorded, a light spot of light passing through the near axis area and the far axis area is focused on the information recording surface of the first optical disk (40B), while, when the second optical disk is to be reproduced/recorded, a light spot of light passing through the near axis area and the annular lens area is focused on the information recording surface of the second optical disk.

7. The device as claimed in any preceding claim, wherein the light source (50) is an edge emitting laser or a vertical cavity surface emitting laser, and the optical path changing means comprises:
a polarization hologram element (61) for diffracting incident light to the 0^{th} order ray, or +1^{st} order and/or -1^{st} order rays according to a linear polarization component thereof; and
a wave plate (63) for changing the polarization of the incident light.

8. The device as claimed in any of claims 1 to 6, wherein the light source (50) is an edge emitting laser or a vertical cavity surface emitting laser, and the optical path changing means comprises a beam splitter (60) arranged between the light source (50) and the objective lens (70) for transmitting and/or reflecting incident light.

9. The device as claimed in claim 8, wherein the beam splitter is provided to transmit or reflect incident light according to polarization of the incident light, and further comprises a wave plate arranged between the beam splitter and the objective lens for changing the polarization of the incident light.

10. The device as claimed in any preceding claim, further comprising a collimating lens (65) on an optical path between the optical path changing means and the objective lens (70).

11. A compatible optical pickup device including a single light source (50), an objective lens (70) for forming a light spot on an optical disk by focusing light emitted from the light source (50), an optical path changing means arranged on the optical path between the light source (50) and the objective lens (70) for changing a proceeding path of incident light, and a photodetector (100) for receiving light reflected by the optical disk (40) and passing through the objective lens (70) and the optical path changing means and detecting an information signal and/or error signal, the objective lens (70) is formed of a near axis area, a ring type annular lens area, and a far axis area with respect to an apex, for focusing light emitted from the light source (50) to form light spots suitable for a first optical disk (40A) which is relatively thin and a second optical disk (40B) which is relatively thick and having an effective numerical aperture of greater than or equal to 0.63 with respect to the first optical disk (40A) and an effective numerical aperture of less than or equal to 0.53 with respect to the second optical disk (40B), the compatible optical pickup device **characterized in that** the single light source (50) emits light having a wavelength between 680-780nm.

12. The device as claimed in claim 11, wherein the first optical disk is an optical disk (40A) of a DVD family and the second optical disk is an optical disk (40B) of a CD family.

13. The device as claimed in claim 11 or 12, wherein the annular lens area of the objective lens (20) is optimized to the second optical disk (40B) so that, when the first optical disk (40A) is to be reproduced/recorded, a light spot of light passing through the near axis area and the far axis area is focused on the information recording surface of the first optical disk (40A), while, when the second optical disk (40B) is to be reproduced/recorded, a light spot of light passing through the near axis area and the annular lens area is focused on the information recording surface of the second optical disk (40B).

## Patentansprüche

1. Kompatible optische Abnehmervorrichtung, die eine einzelne lichtquelle (50), eine Objektivlinse (70), die einen Lichtpunkt auf einer optische Platte (40) erzeugt, indem sie von der Lichtquelle (50) emittiertes Licht fokussiert, eine Lichtweg-Änderungseinrichtung, die auf dem Lichtweg zwischen der Lichtquelle (50) und der Objektivlinse (70) angeordnet ist, um einen Ausbreitungsweg von auftreffendem Licht zu ändern, und einen Fotodetektor (100) enthält, der durch die optische Platte (40) reflektiertes Licht empfängt und durch die Objektivlinse sowie die Lichtweg-Änderungseinrichtung leitet und ein Informationssignal und/oder ein Fehlersignal erfasst, wobei die Objektlinse (70) aus einem achsennahen Bereich, einem ringartigen Linsenbereich und einem achsenfemen Bereich in Bezug auf einen Scheitel besteht, um von der Lichtquelle (50) emittiertes Licht zu fokussieren und Lichtpunkte zu erzeugen, die für eine erste optische Platte (40A), die relativ dünn ist, sowie eine zweite optische Platte (40B), die relativ dick ist, geeignet sind;
**dadurch gekennzeichnet, dass**
die Objektivlinse (70) einen ersten Lichtpunkt erzeugt, der für die erste optische Platte (40A) geeignet ist und eine Halbwertsbreite hat, die 0,72 µm oder weniger beträgt, und einen zweiten Lichtpunkt erzeugt, der für die zweite optische Platte (40B) geeignet ist und eine Halbwertsbreite von 0,8 µm oder mehr hat; und
die einzelne Lichtquelle (50) Licht mit einer Wellenlänge zwischen 680 und 780 nm emittiert.

2. Vorrichtung nach Anspruch 1, wobei die erste optische Platte (40A) eine optische Platte einer DVD-Familie ist und die zweite optische Platte (408) eine optische Platte einer CD-Familie ist.

3. Vorrichtung nach Anspruch 1 oder 2, wobei die Objektivlinse (70) eine effektive numerische Apertur von 0,63 oder mehr in Bezug auf die erste optische Platte und eine effektive numerische Apertur von 0,53 oder weniger in Bezug auf die zweite optische Platte hat.

4. Vorrichtung nach Anspruch 1 oder Anspruch 2, wobei die Objektivlinse (70) eine effektive numerische Apertur von 0,7 oder mehr in Bezug auf die erste optische Platte hat, die relativ dünn ist.

5. Vorrichtung nach Anspruch 1 oder 2, wobei die Lichtquelle (50) Licht mit einer Wellenlänge von ungefähr 780 nm emittiert und die Objektivlinse (70) eine effektive numerische Apertur von 0.7 oder mehr in Bezug auf die erste optische Platte sowie eine effektive numerische Apertur von 0,53 oder weniger in Bezug auf die zweite optische Platte (40B) hat.

6. Vorrichtung nach einem der vorangehenden Ansprüche, wobei der ringförmige Linsenbereich der Objektivlinse (70A) auf die zweite optische Platte (40B) optimiert ist, so dass, wenn die erste optische Platte (40A) wiedergegeben/beschrieben werden soll, ein Lichtpunkt von Licht, das durch den achsennahen Bereich und den achsenfemen Bereich hindurch tritt, auf die Informationsaufzeichnungsfläche der ersten optische Platte (40B) fokussiert wird, während, wenn die zweite optische Platte wiedergegeben/beschrieben werden soll, ein Lichtpunkt von Licht, das durch den achsennahen Bereich und den ringförmigen Linsenbereich hindurch tritt, auf die Informationsaufzeichnungsfläche der zweiten optischen Platte fokussiert wird.

7. Vorrichtung nach einem der vorangehenden Ansprüche, wobei die Lichtquelle (50) ein Kantenemissionslaser oder ein VCSEL-Laser ist und die Lichtweg-Änderungseinrichtung umfasst:
ein Polarisations-Hologrammelement (61), das auftreffendes Licht zu dem Strahl 0. Ordnung oder Strahlen + 1. Ordnung und/oder -1. Ordnung entsprechend einer linearen Polarisationskomponente desselben beugt; und
ein Wellenplättchen (63), das die Polarisation des auftreffenden Lichtes ändert.

8. Vorrichtung nach einem der Ansprüche 1 bis 6, wobei die Lichtquelle (50) ein Kantenemissionslaser oder ein VCSEL-Laser ist und die Lichtweg-Änderungseinrichtung einen Strahlteiler (60) umfasst, der zwischen der Lichtquelle (50) und der Objektivlinse (70) angeordnet ist, um auftreffendes Licht durchzulassen und/oder zu reflektieren.

9. Vorrichtung nach Anspruch 8, wobei der Strahlteiler vorhanden ist, um auftreffendes Licht entsprechend der Polarisation des auftreffenden Lichtes durchzulassen oder zu reflektieren, und sie des Weiteren ein Wellenplättchen umfasst, das zwischen dem Strahlteiler und der Objektivlinse angeordnet ist, um die Polarisation des auftreffenden Lichtes zu ändern.

10. Vorrichtung nach einem der vorangehenden Ansprüche, die des Weiteren eine Kollimationslinse (65) auf einem Lichtweg zwischen der Lichtweg-Änderungseinrichtung und der Objektivlinse (70) umfasst.

11. Kompatible optische Abnehmervorrichtung, die eine einzelne Lichtquelle (50), eine Objektivlinse (70), die einen Lichtpunkt auf einer optische Platte erzeugt, indem sie von der Lichtquelle (50) emittiertes Licht fokussiert, eine Lichtweg-Änderungseinrichtung, die auf dem Lichtweg zwischen der Lichtquelle (50) und der Objektivlinse (70) angeordnet ist, um einen Ausbreitungsweg von auftreffendem Licht zu ändern, und einen Fotodetektor (100) enthält, der durch die optische Platte (40) reflektiertes Licht empfängt und durch die Objektivlinse (70) sowie die Lichtweg-Änderungseinrichtung leitet und ein Informationssignal und/oder ein Fehlersignal erfasst, wobei die Objektivlinse (70) aus einem achsennahen Bereich, einem ringartigen Linsenbereich und einem achsenfernen Bereich in Bezug auf einen Scheitel besteht, um von der Lichtquelle (50) emittiertes Licht zu fokussieren und Lichtpunkte zu erzeugen, die für eine erste optische Platte (40A), die relativ dünn ist, sowie eine zweite optische Platte (40B), die relativ dick ist, geeignet sind, und eine effektive numerische Apertur von 0,63 oder mehr in Bezug auf die erste optische Platte (40A) sowie eine effektive numerische Apertur von 0,53 oder weniger in Bezug auf die zweite optische Platte (40B) hat, wobei die kompatible optische Abnehmervorrichtung **dadurch gekennzeichnet ist, dass** die einzelne Lichtquelle (50) Licht mit einer Wellenlänge zwischen 680 und 780 nm emittiert.

12. Vorrichtung nach Anspruch 11, wobei die erste optische Platte eine optische Platte (40A) einer DVD-Familie ist und die zweite optische Platte eine optische Platte (40B) einer CD-Familie ist.

13. Vorrichtung nach Anspruch 11 oder 12, wobei der ringförmige Linsenbereich der Objektivlinse (20) auf die zweite optische Platte (40B) optimiert ist, so dass, wenn die erste optische Platte (40A) wiedergegeben/beschrieben werden soll, ein Lichtpunkt von Licht, das durch den achsennahen Bereich und den achsenfemen Bereich hindurch tritt, auf die Informationsaufzeichnungsfläche der ersten optischen Platte (40A) fokussiert wird, während, wenn die zweite optische Platte (40B) wiedergegeben/beschrieben werden soll, ein Lichtpunkt von Licht, das durch den achsennahen Bereich und den ringförmigen Linsenbereich hindurch tritt, auf die Informationsaufzeichnungsfläche der zweiten optischen Platte (40B) fokussiert wird.

## Revendications

1. Dispositif à tête de lecture optique compatible incluant une source lumineuse unique (50), un objectif (70) pour former un spot lumineux sur un disque optique (40) en focalisant une lumière émise par la source lumineuse (50), un moyen de changement de trajet optique disposé sur le trajet optique entre la source lumineuse (50) et l'objectif (70) pour changer un trajet de progression de lumière incidente, et un photodétecteur (100) pour recevoir une lumière réfléchie par le disque optique (40) et traversant l'objectif et le moyen de changement de trajet optique et détecter un signal d'informations et/ou un signal d'erreur, l'objectif (70) est formé d'une zone d'axe proche, d'une zone de lentille annulaire de type anneau, et d'une zone d'axe éloignée par rapport à un sommet, pour focaliser une lumière émise par la source lumineuse (50) afin de former des spots lumineux adaptés à un premier disque optique (40A) qui est relativement mince et à un second disque optique (40B) qui est relativement épais,
**caractérisé en ce que** :
l'objectif (70) forme un premier spot lumineux adapté au premier disque optique (40A) qui a une LMH égale ou inférieure à 0,72 µm et un second spot lumineux adapté au second disque optique (40B) qui a une LMH supérieure ou égale à 0,8 µm, et
la source lumineuse unique (50) émet une lumière ayant une longueur d'onde comprise entre 680~780 nm, le terme LMH signifiant largeur à mi-hauteur.

2. Dispositif selon la revendication 1, dans lequel le premier disque optique (40A) est un disque optique de la famille DVD et le second disque optique (40B) est un disque optique de la famille CD.

3. Dispositif selon la revendication 1 ou 2, dans lequel l'objectif (70) a une ouverture numérique réelle supérieure ou égale à 0,63 en ce qui concerne le premier disque optique et une ouverture numérique réelle inférieure ou égale à 0,53 en ce qui concerne le second disque optique.

4. Dispositif selon la revendication 1 ou la revendication 2, dans lequel l'objectif (70) a une ouverture numérique réelle égale ou supérieure à 0,7 en ce qui concerne le premier disque optique qui est relativement mince.

5. Dispositif selon la revendication 1 ou 2, dans lequel la source lumineuse (50) émet une lumière ayant une longueur d'onde d'environ 780 nm, et l'objectif (70) a une ouverture numérique réelle supérieure ou égale à 0,7 en ce qui concerne le premier disque optique et une ouverture numérique réelle inférieure ou égale à 0,53 en ce qui concerne le second disque optique (40B).

6. Dispositif selon l'une quelconque des revendications précédentes, dans lequel la zone de lentille annulaire de l'objectif (70) est optimisée pour le second disque optique (40B) de sorte que, lorsque le premier disque optique (40A) doit être reproduit/enregistré, un spot lumineux de lumière traversant la zone d'axe proche et la zone d'axe éloignée est focalisé sur la surface d'enregistrement d'informations du premier disque optique (40B), alors que, lorsque le second disque optique doit être reproduit/enregistré, un spot lumineux de lumière traversant la zone d'axe proche et la zone de lentille annulaire est focalisé sur la surface d'enregistrement d'informations du second disque optique.

7. Dispositif selon l'une quelconque des revendications précédentes, dans lequel la source lumineuse (50) est un laser à émission latérale ou un laser à émission sur surface à cavité latérale, et le moyen de changement de trajet optique comporte :
un élément d'hologramme de polarisation (61) pour diffracter une lumière incidente sur le rayon du 0ème ordre, ou des rayons du +1er ordre et/ou -1er ordre conformément à une composante de polarisation linéaire de ceux-ci, et
une lame d'onde (63) pour changer la polarisation de la lumière incidente.

8. Dispositif selon l'une quelconque des revendications 1 à 6, dans lequel la source lumineuse (50) est un laser à émission latérale ou un laser à émission sur surface à cavité latérale, et le moyen de changement de trajet optique comporte un diviseur de faisceau (60) disposé entre la source lumineuse (50) et l'objectif (70) pour transmettre et/ou réfléchir une lumière incidente.

9. Dispositif selon la revendication 8, dans lequel le diviseur de faisceau est prévu pour transmettre ou réfléchir une lumière incidente conformément à la polarisation de la lumière incidente, et comporte en outre une lame d'onde disposée entre le diviseur de faisceau et l'objectif pour changer la polarisation de la lumière incidente.

10. Dispositif selon l'une quelconque des revendications précédentes, comportant en outre une électrode de collimation (65) sur un trajet optique entre le moyen de changement de trajet optique et l'objectif (70).

11. Dispositif à tête de lecture optique compatible incluant une source lumineuse unique (50), un objectif (70) pour former un spot lumineux sur un disque optique en focalisant une lumière émise par la source lumineuse (50), un moyen de changement de trajet optique disposé sur le trajet optique entre la source lumineuse (50) et l'objectif (70) pour changer un trajet de progression de lumière incidente, et un photodétecteur (100) pour recevoir une lumière réfléchie par le disque optique (40) et traversant l'objectif (70) et le moyen de changement de trajet optique et détecter un signal d'informations et/ou un signal d'erreur, l'objectif (70) est formé d'une zone d'axe proche, d'une zone de lentille annulaire de type anneau, et d'une zone d'axe éloignée par rapport à un sommet, pour focaliser une lumière émise par la source lumineuse (50) afin de former des spots lumineux adaptés à un premier disque optique (40A) qui est relativement mince et à un second disque optique (40B) qui est relativement épais et ayant une ouverture numérique réelle supérieure ou égale à 0,63 concernant le premier disque optique (40A) et une ouverture numérique réelle inférieure ou égale à 0,53 concernant le second disque optique (40B), le dispositif à tête de lecture optique compatible étant **caractérisé en ce que** la source lumineuse unique (50) émet une lumière ayant une longueur d'onde comprise entre 680~780 nm.

12. Dispositif selon la revendication 11, dans lequel le premier disque optique est un disque optique (40A) de la famille DVD et le second disque optique est un disque optique (40B) de la famille CD.

13. Dispositif selon la revendication 11 ou 12, dans lequel la zone de lentille annulaire de l'objectif (20) est optimisée pour le second disque optique (40B) de sorte que, lorsque le premier disque optique (40A) doit être reproduit/enregistré, un spot lumineux de lumière traversant la zone d'axe proche et la zone d'axe éloignée est focalisé sur la surface d'enregistrement d'informations du premier disque optique (40A), alors que, lorsque le second disque optique (40B) doit être reproduit/enregistré, un spot lumineux de lumière traversant la zone d'axe proche et la zone de lentille annulaire est focalisé sur la surface d'enregistrement d'informations du second disque optique (40B).
